# EUROPEAN PATENT APPLICATION

(11) **EP 4 282 540 A1**
(43) Date of publication of application: **29.11.2023**
(21) Application number: 21921230.5
(22) Date of filing: 01.12.2021
(51) Int. Cl.: B05C 13/02, B05C 5/02, H01M 4/04, H01M 4/139

(54) **DOUBLE-SIDED COATING APPARATUS**

(30) Priority: 19.01.2021 JP 2021006247
(71) Applicant: Panasonic Intellectual Property Management Co., Ltd., Osaka-shi, Osaka 540-6207 (JP)
(72) Inventor: FUKUTOMI Yuta, Kadoma-shi, Osaka 571-0057 (JP); TOKIEDA Daisuke, Kadoma-shi, Osaka 571-0057 (JP)
(74) Representative: Novagraaf International SA
(86) International application number: PCT/JP2021/044042
(87) International publication number: WO 2022/158128

(57) **Abstract**

This double-sided coating apparatus 1 comprises a transport mechanism 2 for continuously transporting a base material 12 having a first surface 12a and a second surface 12b, a first die 4 for applying a first coating material 18 to the first surface 12a, a second die 6 for applying a second coating material 20 to the second surface 12b, and a support portion 8 for supporting the base material 12 at a target coating height H1 by transfer of a gas, the transfer including at least one of ejection and suction of the gas. The second die 6 has a first opening 30, a second opening 32, a first space 34, and a second space 36. The second coating material 20 flows into the first space 34, and the first opening 30 constitutes a discharge port for the second coating material 20. The support portion 8 is disposed in the second space 36, and the second opening 32 constitutes a transfer port for carrying out at least one of ejection and suction of the gas.

## Description

### [TECHNICAL FIELD]

The present invention relates to a double-sided coating apparatus.

### [BACKGROUND ART]

Conventionally, in the field of manufacturing lithium-ion secondary batteries, for example, double-sided coating apparatuses are known that form an electrode active material layer by applying a coating containing an electrode active material to both sides of a substrate such as metal foil while conveying the substrate by a roll-to-roll process. As such a double-side coating apparatus, a structure is known in which a first paint is first applied to the first surface of the substrate and dried, and then a second paint is applied to the second surface of the substrate and dried. However, this structure requires two drying furnaces, which increases the overall length, facility cost, and installation space.

In contrast, a double-sided coating apparatus has been proposed that first applies the first coating material to the first surface of the substrate, then applies the second coating material to the second surface, and then dries the first and second coating materials at once. In such a double-sided coating apparatus, the first coating material can be applied to the first surface while the second surface is supported by a backup roll. However, when the second coating material is applied to the second surface, the first surface on which an undried first coating material has been applied cannot be supported by the backup roll. Therefore, it is necessary to apply the second coating material to the second surface while the substrate is in a state of being suspended in the air.

It is difficult to maintain the position and flatness of the substrate when the substrate is in a state of being suspended in the air. Therefore, the thickness of a film of the second coating material tends to be non-uniform. In contrast, for example, Patent Document 1 proposes a thin-film coating apparatus that causes the tip of a nozzle portion that discharges a coating material to be in contact with a substrate being conveyed and applies the coating material while the substrate is being supported by the nozzle portion.

[Patent Document 1] JP 2011-143388

### [SUMMARY OF INVENTION]

### [TECHNICAL PROBLEM]

In the conventional thin-film coating apparatus described above, by supporting the substrate with the nozzle portion, it is possible to suppress deflection and vibration of the substrate. This allows for the formation of a coating film with a more uniform thickness. However, there is a possibility that particles may be generated due to abrasion of the substrate and the nozzle portion due to friction between the substrate and the nozzle portion during transportation. Generation of particles is desirably avoided because it can lead to deterioration of product quality.

In this background, a purpose of the present disclosure is to provide a technology for suppressing deflection and vibration of a substrate while suppressing the generation of particles in a double-sided coating apparatus.

### [SOLUTION TO PROBLEM]

One embodiment of the present disclosure relates to a double-sided coating apparatus. This apparatus includes: a conveying mechanism that continuously conveys a long substrate having a first surface and a second surface opposite to the first surface; a first die that applies a first coating material to the first surface; a second die that is located downstream of the first die in the conveyance direction of the substrate and that applies a second coating material to the second surface; and a support unit that is located downstream of the first die in the conveyance direction and that supports the substrate at a target coating height at which the second surface is separated from the second die by a predetermined amount through gas transfer that includes at least one of discharge of gas to the second surface and suction of gas interposed between the support unit and the second surface. The second die has a first opening and a second opening that open toward the second surface and has a first space communicating with the first opening and a second space communicating with the second opening. The second coating material flows into the first space, and the first opening forms a discharge port for the second coating material. The support unit is arranged in the second space, and the second opening forms a transfer port that performs at least one of the discharge of gas and the suction of gas.

Optional combinations of the aforementioned constituting elements, and implementations of the present disclosure in the form of methods, apparatuses, and systems may also be practiced as additional modes of the present disclosure.

### [ADVANTAGEOUS EFFECTS OF INVENTION]

According to the present disclosure, deflection and vibration of a substrate can be suppressed while suppressing the generation of particles in a double-sided coating apparatus.

### [BRIEF DESCRIPTION OF THE DRAWINGS]

FIG. 1 is a side view that schematically shows a double-sided coating apparatus according to an embodiment;
FIG. 2 is a side view that shows a part of the double-sided coating apparatus in an enlarged manner;
FIG. 3 is a plan view of a second die; and
FIG. 4 is a cross-sectional view of a second die of a double-sided coating apparatus according to an exemplary variation.

### [DESCRIPTION OF EMBODIMENTS]

Hereinafter, the present disclosure will be described based on a preferred embodiment with reference to the figures. The embodiments do not limit the present disclosure and are shown for illustrative purposes, and not all the features described in the embodiments and combinations thereof are necessarily essential to the present disclosure. The same or equivalent constituting elements, members, and processes illustrated in each drawing shall be denoted by the same reference numerals, and duplicative explanations will be omitted appropriately. The scales and shapes shown in the figures are defined for convenience's sake to make the explanation easy and shall not be interpreted limitatively unless otherwise specified. Terms like "first", "second", etc., used in the specification and claims do not indicate an order or importance by any means unless specified otherwise and are used to distinguish a certain feature from the others. Some of the components in each figure may be omitted if they are not important for explanation.

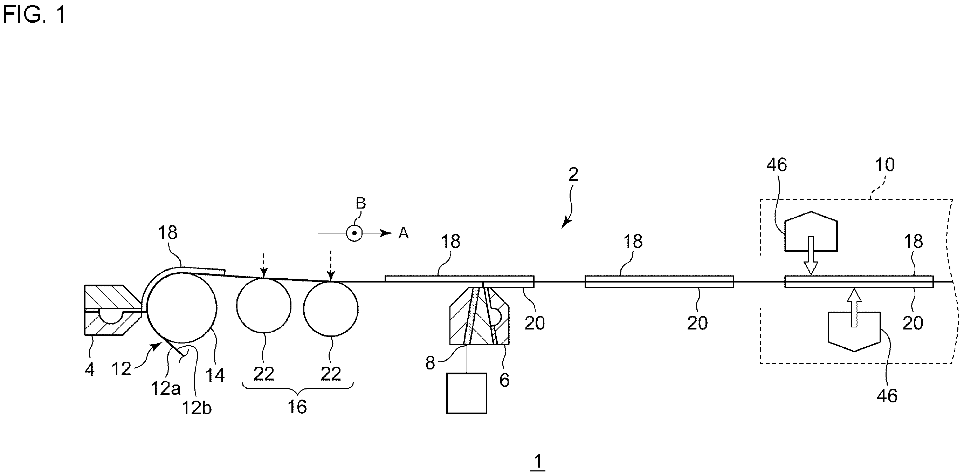

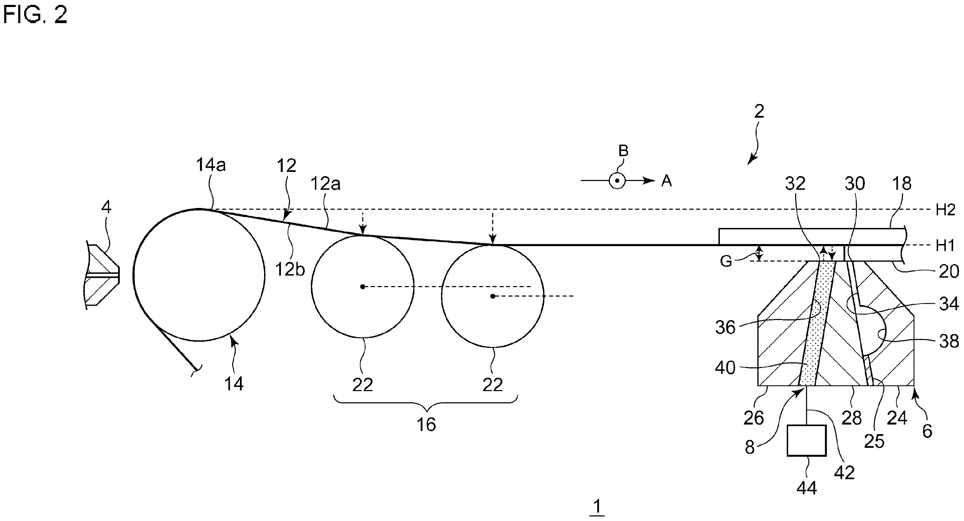

FIG. 1 is a side view that schematically shows a double-sided coating apparatus 1 according to an embodiment. FIG. 2 is a side view that shows a part of the double-sided coating apparatus 1 in an enlarged manner. A first die 4 and a second die 6 are illustrated in cross-section. The double-sided coating apparatus 1 includes a conveying mechanism 2, a first die 4, a second die 6, a support unit 8, and a drying furnace 10. The first die 4, the second die 6, and the drying furnace 10 are arranged in the order listed from the upstream side in the conveyance direction A of the substrate 12 by a conveying mechanism 2. Further, the first die 4, the second die 6, and the drying furnace 10 are arranged approximately in the horizontal direction. The support unit 8 is incorporated into the second die 6. Therefore, the second die 6 and the support unit 8 are located downstream of the first die 4 in the conveyance direction A.

The conveying mechanism 2 continuously conveys a long thin-film substrate 12. The substrate 12 is in a winding state, is drawn out from the winding by the conveying mechanism 2, passes through the first die 4, the second die 6, and the drying furnace 10, and is wound up on a winding reel (not shown). The conveying mechanism 2 has a roll 14 and a retracting unit 16. The roll 14 is located upstream of the second die 6 in the conveyance direction A of the substrate 12 and conveys the substrate 12 while supporting the substrate 12 on the periphery surface thereof. The roll 14 according to the present embodiment is arranged such that the peripheral surface thereof faces a discharge port of the first die 4 with a predetermined gap (coating gap) and functions as a backup roll.

The substrate 12 has a first surface 12a and a second surface 12b opposite the first surface 12a. The roll 14 conveys the substrate 12 while supporting the second surface 12b on the peripheral surface thereof and passes the substrate 12 through the gap between the first die 4 and the roll 14. The first die 4 applies a first coating material 18 to the first surface 12a of the substrate 12 passing through the gap between the first die 4 and the roll 14. As an example, the first die 4 is oriented such that the discharge port faces the horizontal direction and is horizontally aligned with the roll 14.

The double-sided coating apparatus 1 according to the present embodiment is used for producing an electrode plate of a secondary battery. The electrode plate of a secondary battery is a sheet-shaped electrode material obtained by applying an electrode slurry to a current collector and then drying the electrode slurry. Therefore, in the present embodiment, the substrate 12 is a current collector of the secondary battery, and the first coating material 18 is an electrode slurry of the secondary battery. A second coating material 20 discharged from the second die 6 is also an electrode slurry of the secondary battery. The current collector is, for example, metal foil. The electrode slurry is, for example, a mixture of a positive electrode active material or a negative electrode active material and a solvent. In the case of a commonly-used lithium ion secondary battery, a positive electrode plate is produced by applying a slurry containing a positive electrode active material such as lithium cobalt oxide or lithium iron phosphate on aluminum foil. Further, the electrode plate of the negative electrode is produced by applying a slurry containing a negative electrode active material such as graphite on copper foil. The first coating material 18 and the second coating material 20 may be the same or different coatings. The double-sided coating apparatus 1 can also be used for manufacturing articles other than electrode plates.

The roll 14 feeds the substrate 12 to the downstream side in the conveyance direction A with the first surface 12a coated with the first coating material 18 facing upward and the second surface 12b not coated with the second coating material 20 facing downward. The substrate 12 is fed from the roll 14 in a substantially horizontal direction. The upper end of the peripheral surface of the roll 14 is located at a position higher than a target coating height H1 of the substrate 12. The height of a position 14a where the substrate 12 is separated from the peripheral surface of the roll 14, that is, a feeding height H2, is higher than the target coating height H1. The target coating height H1 is the height at which the second surface 12b is separated from the second die 6 by a predetermined amount. When the substrate 12 is located at the target coating height H1, a predetermined coating gap G is formed between the discharge port of the second die 6 and the second surface 12b. The feeding height H2 is approximately the same height as the upper end of the peripheral surface of the roll 14. However, strictly speaking, the feeding height H2 is shifted slightly lower than the upper end of the peripheral surface as the substrate 12 is drawn downward by the retracting unit 16.

The retracting unit 16 is arranged between the roll 14 and the second die 6 in the conveyance direction A. The substrate 12 fed from the roll 14 is retracted by the retracting unit 16 so as to approach the target coating height H1. The retracting unit 16 has a suction unit 22 that sucks gas such as atmospheric gas (e.g., air). The retracting unit 16 can draw the substrate 12 downward by sucking the atmospheric gas interposed between the retracting unit 16 and the second surface 12b by the suction unit 22. The suction unit 22 can be composed of a known suction roller, suction plate, suction type air knife, etc. The height of the suction unit 22 is mechanically adjustable and is optimally adjusted according to the thickness and mass of the substrate 12.

The retracting unit 16 according to the present embodiment has a plurality of suction units 22 lined up in the conveyance direction A. In FIGS. 1 and 2, two suction units 22 are arranged in the conveyance direction A. The plurality of suction units 22 are arranged such that the installation height thereof decreases toward the downstream side of the conveyance direction A. In other words, the suction units 22 located downstream of the conveyance direction A are lower than the suction units 22 located upstream of the conveyance direction A, in other words, are closer to the target coating height H1. The substrate 12 is drawn down by the retracting unit 16 to the target coating height H1 and fed to the downstream side of the conveyance direction A. Three or more suction units 22 may be arranged in the conveyance direction A, or there may be only one suction unit 22. If the feeding height H2 of the roll 14 roughly matches the target coating height H1, the retracting unit 16 may be omitted.

A second die 6 is arranged downstream of the retracting unit 16 in the conveyance direction A. The second die 6 applies the second coating material 20 to the second surface 12b of the substrate 12 that is in a state of being suspended in the air. The substrate 12 is suspended in the air at least in a region facing the second die 6. As an example, the second die 6 is oriented such that the discharge port faces vertically upward and applies the second coating material 20 to the second surface 12b facing vertically downward. Further, the second die 6 incorporates a support unit 8.

The support unit 8 supports the substrate 12 at the target coating height H1 by transferring gas to the second surface 12b. The transfer of gas to the second surface 12b includes at least one of discharge of gas to the second surface 12b and suction of gas (i.e., atmospheric gas) interposed between the support unit 8 and the second surface 12b. When the support unit 8 discharges gas, the gas that is discharged is, for example, atmospheric gas. The support unit 8 according to the present embodiment supports the substrate 12 at the target coating height H1 by a combination of gas discharge and suction. The support unit 8 may support the substrate 12 at the target coating height H1 only by the discharge of gas or may support the substrate 12 at the target coating height H1 only by the suction of gas.

As an example, the second die 6 has a first main unit 24, a second main unit 26, an intermediate member 28, a first opening 30, a second opening 32, a first space 34, and a second space 36. The first main unit 24, the second main unit 26, and the intermediate member 28 are long in the width direction B of the substrate 12, which is perpendicular to the conveyance direction A. The first main unit 24 is arranged downstream of the second main unit 26 and the intermediate member 28 in the conveyance direction A. The second main unit 26 is arranged upstream of the first main unit 24 and the intermediate member 28 in the conveyance direction A. The intermediate member 28 is sandwiched between the first main unit 24 and the second main unit 26 in the conveyance direction A. The intermediate member 28 becomes thinner as the first main unit 24 and the second main unit 26 approach each other as they approach the substrate 12. The intermediate member 28 according to the present embodiment has a substantially triangular shape that tapers toward the substrate 12 when viewed from the width direction B.

The first opening 30 that opens toward the second surface 12b and the first space 34 that communicates with the first opening 30 are arranged between the first main unit 24 and the intermediate member 28. For example, a sheet-shaped first shim 25 is interposed between the first main unit 24 and the intermediate member 28. This creates a gap corresponding to the thickness of the first shim 25 between the first main unit 24 and the intermediate member 28. This gap forms the first space 34. An open end of this gap that faces the second surface 12b forms the first opening 30. The first main unit 24 has a long recess in the width direction B on a surface that faces the intermediate member 28 side. This recess forms a manifold 38. The manifold 38 may be provided in the intermediate member 28.

A supply pipe for the second coating material 20 is connected to the manifold 38, and the second coating material 20 is supplied from the outside. The end of the first space 34 on the side opposite to the second opening 32 communicates with the manifold 38. The second coating material 20 supplied to the manifold 38 flows through the first space 34 and is discharged from the second opening 32 to the second surface 12b. Therefore, the first space 34 forms a flow channel for the second coating material 20 and the first opening 30 forms a discharge port for the second coating material 20.

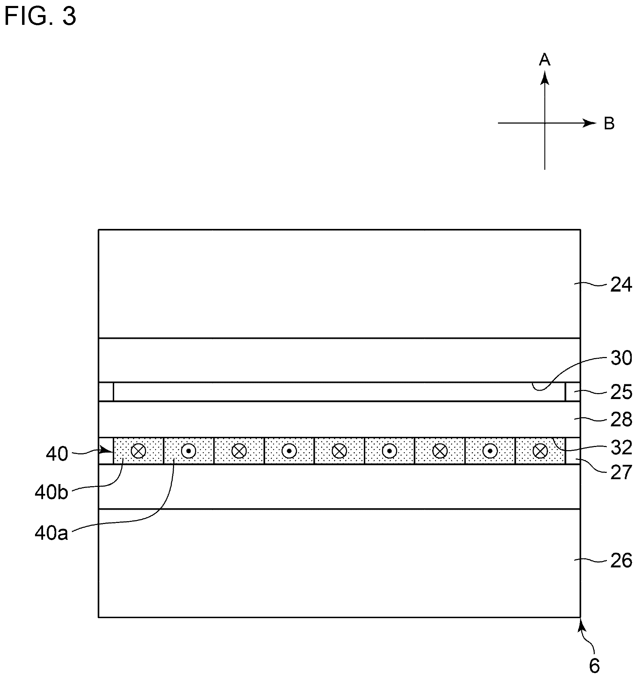

The second opening 32 that opens toward the second surface 12b and the second space 36 that communicates with the second opening 32 are arranged between the second main unit 26 and the intermediate member 28. For example, a sheet-shaped second shim 27 (see FIG. 3) is interposed between the second main unit 26 and the intermediate member 28. This creates a gap corresponding to the thickness of the second shim 27 between the second main unit 26 and the intermediate member 28. This gap forms the second space 36. An open end of this gap that faces the second surface 12b forms the second opening 32. The second opening 32 is located upstream of the first opening 30 in the conveyance direction A and the second space 36 is located upstream of the first space 34 in the conveyance direction A. The second opening 32 may be located downstream of the first opening 30 in the conveyance direction A.

The support unit 8 is arranged in the second space 36, and the second opening 32 forms a transfer port for performing the discharge of gas and the suction of gas. If the support unit 8 only discharges gas, the second opening 32 forms a discharge port, and if the support unit 8 only suctions gas, the second opening 32 forms a suction port. Preferably, the end of the support unit 8 on the second surface 12b side is arranged so as to be flush with the first opening 30. Therefore, the support unit 8 and the first opening 30 are separated from the second surface 12b by the same distance.

The support unit 8 according to the present embodiment has, as an example, a porous material 40, a pipe 42, and an air supply and intake device 44. The porous material 40 is inserted into the second space 36 and the end on the second surface 12b side is exposed through the second opening 32. The end of the porous material 40 on the second surface 12b side is substantially flush with the first opening 30.

FIG. 3 is a plan view of the second die 6. In FIG. 3, X marks that are circled represent the flow of gas that is suctioned, and black dots that are circled represent the flow of gas that is discharged. As shown in FIG. 3, the porous material 40 according to the present embodiment is partitioned into a plurality of regions where the amount of gas that is transferred (the amount of gas discharged and/or suctioned) differs from one another. For example, each region is hermetically partitioned by partition plates. In the following, a region where gas is discharged is referred to as discharge region 40a, and a region where gas is suctioned is referred to as suction region 40b. The porous material 40 according to the present embodiment has a plurality of discharge regions 40a and a plurality of suction regions 40b. The plurality of discharge regions 40a differ from one another in the amount of gas discharged at least in part. The plurality of suction regions 40b differ from one another in the amount of gas suctioned at least in part.

The plurality of regions are aligned in the width direction B of the substrate 12. In the example shown in FIG. 3, the plurality of discharge regions 40a and the plurality of suction regions 40b are arranged alternately in the width direction B. As an example, the amount of gas discharged decreases as the plurality of discharge regions 40a are located further outside in the width direction B, and the amount of gas suctioned increases as the plurality of suction regions 40b are located further outside in the width direction B. This allows the draw-in amount of the substrate 12 to be increased toward the outside in the width direction B. Alternatively, the amount of gas discharged increases as the plurality of discharge regions 40a are located further outside in the width direction B, and the amount of gas suctioned decreases as the plurality of suction regions 40b are located further outside in the width direction B. This allows the pushing-out amount of the substrate 12 to be increased toward the outside in the width direction B.

The plurality of discharge regions 40a may have the same discharge amounts, and the plurality of suction regions 40b may have different suction amounts. Alternatively, the plurality of discharge regions 40a may have different discharge amounts and the plurality of suction regions 40b may have the same suction amounts. When the support unit 8 only discharges gas, the porous material 40 has only a plurality of discharge regions 40a, and the discharge amounts differ from one another in at least some of the plurality of discharge regions 40a. When the support unit 8 only suctions gas, the porous material 40 has only a plurality of suction regions 40b, and the discharge amounts differ from one another in at least some of the plurality of suction regions 40b. The plurality of regions may be arranged in the conveyance direction A. The support unit 8 does not have a plurality of divided discharge regions 40a, and the discharge amount may be uniform. The support unit 8 does not have a plurality of divided suction regions 40b, and the suction amount may be uniform.

As shown in FIG. 2, the air supply and intake device 44 is connected to the porous material 40 via the pipe 42. The air supply and intake device 44 includes, for example, a compressor that discharges gas and a vacuum pump that suctions gas. The compressor is connected to each discharge region 40a via the pipe 42, and the vacuum pump is connected to each suction region 40b via the pipe 42. Different air supply amounts in the respective discharge regions 40a may be realized by connecting separate compressors to the respective discharge regions 40a or may be realized by changing the porosity or the like of the respective discharge regions 40a. In the same manner, air intake amounts in the respective suction regions 40b may be realized by connecting separate vacuum pumps to the respective suction regions 40b or may be realized by changing the porosity or the like of the respective suction regions 40b.

By driving the air supply and intake device 44, gas is blown from each discharge region 40a to the second surface 12b, and the gas interposed between the second die 6 and the second surface 12b is suctioned from each suction region 40b. The substrate 12 is supported at the target coating height H1 while being suspended in the air due to the balance between the positive pressure generated by the ejection of gas from each discharge region 40a and the negative pressure generated by the suction of gas from each suction region 40b. This allows the second coating material 20 to be applied to the second surface 12b while a desired coating gap G is formed between the substrate 12 and the second die 6 and while the flatness of the substrate 12 is maintained with high accuracy. The support unit 8 may have another known structure capable of performing at least one of gas discharge and gas suction.

As shown in FIG. 1, a drying furnace 10 is arranged downstream of the second die 6 in the conveyance direction A. Inside the drying furnace 10, gas injection nozzles 46 that blow out gas (e.g., hot air) for drying the first coating material 18 and the second coating material 20 are provided one above the other. The substrate 12 with the first coating material 18 applied on the first surface 12a and the second coating material 20 applied on the second surface 12b is conveyed inside the drying furnace 10 while being suspended in the air by the gas blown out from the gas injection nozzles 46. The substrate 12, on which the first coating material 18 and the second coating material 20 are dried in the process of passing through the drying furnace 10, is wound onto a take-up reel after exiting the drying furnace 10.

As explained above, a double-sided coating apparatus 1 according to the present embodiment includes a conveying mechanism 2, a first die 4, a second die 6, and a support unit 8. The conveying mechanism 2 continuously conveys a substrate 12 having a first surface 12a and a second surface 12b. The first die 4 applies a first coating material 18 to the first surface 12a. The second die 6 is located downstream of the first die 4 in the conveyance direction A and applies the second coating material 20 to the second surface 12b. The support unit 8 is located downstream of the first die 4 in the conveyance direction A and supports the substrate 12 at the target coating height H1 through gas transfer that includes at least one of discharge of gas to the second surface 12b and suction of gas interposed between the support unit 8 and the second surface 12b.

The second die 6 has on a surface thereof a first opening 30 and a second opening 32 opening toward the second surface 12b and has therein a first space 34 communicating with the first opening 30 and a second space 36 communicating with the second opening 32. The second coating material 20 flows into the first space 34, and the first opening 30 forms a discharge port for the second coating material 20. The support unit 8 (a porous material 40 in the present embodiment) is arranged in the second space 36, and the second opening 32 forms a transfer port for performing at least one of the discharge of gas and the suction of gas.

The substrate 12 is supported at one end by a roll 14 and at the other end by a transport roll or take-up roll, which is not shown, downstream of the drying furnace 10. This allows a portion of the substrate 12 between the two rolls to be suspended in the air, creating a state in which the substrate 12 is not in contact with the second die 6. However, the substrate 12 in a state of being suspended in the air sags considerably due to its own weight. When the substrate 12 sags, vibration of the substrate 12 caused by rotation of the roll 14 or hot air from the drying furnace 10 easily propagates through the substrate 12, making it difficult to maintain the position of the substrate 12 in a stable manner. Further, distortion occurs in the substrate 12, resulting in a decrease in flatness.

In contrast, in the double-sided coating apparatus 1 according to the present embodiment, the support unit 8 performs at least one of the discharge of gas and the suction of gas on the substrate 12, thereby supporting the substrate 12 at the target coating height H1 while suspending the substrate 12 in the air. Further, the support unit 8 is incorporated into the second die 6. Therefore, the substrate 12 can be supported at the target coating height H1 at a position extremely close to the discharge port for the second coating material 20. This can suppress the generation of particles and also suppress distortion and vibration of the substrate 12 at the discharge position of the second coating material 20. Therefore, according to the double-sided coating apparatus 1 of the present embodiment, the second coating material 20 can be applied to the second surface 12b while the position and flatness of the substrate 12 are maintained with high accuracy. As a result, a more accurate and higher quality coating film of the second coating material 20 can be formed.

Further, the support unit 8 is partitioned into a plurality of regions where the amount of gas that is transferred differs from one another. In the present embodiment, the porous material 40 of the support unit 8 is partitioned into a plurality of discharge regions 40a and a plurality of suction regions 40b. At least some of the plurality of discharge regions 40a differ from one another in the amount of gas discharged. Further, at least some of the plurality of suction regions 40b differ from one another in the amount of gas suctioned. Thereby, the pushing-out and draw-in amounts of the substrate 12 by the support unit 8 can be adjusted according to the amount of deflection and distortion of the substrate 12 at each location. As a result, the flatness of the substrate 12 can be further improved. Further, the plurality of regions are aligned in the width direction B of the substrate 12 in the present embodiment. The substrate 12 tends to flex more at both ends than at the center in the width direction B. Therefore, by making the pushing-out and draw-in amounts of the substrate 12 adjustable in the width direction B, the flatness of the substrate 12 can be further improved.

Further, the end of the support unit 8 on the second surface 12b side is arranged so as to be flush with the first opening 30. In the present embodiment, the end of the porous material 40 of the support unit 8 is flush with the first opening 30. Thereby, it is possible to easily support the substrate 12 by bringing the support unit 8 closer to the second surface 12b as much as possible and to easily prevent the support unit 8 from coming into contact with the second surface 12b.

In the present embodiment, although the support unit 8 is provided in the second die 6, the support unit 8 may also be provided in the first die 4. In this case, the first coating material 18 is applied to the first surface 12a from the first die 4 while the substrate 12 is suspended in the air.

Described above is a detailed explanation on the embodiments of the present disclosure. The above-described embodiments merely show specific examples for carrying out the present disclosure. The details of the embodiments do not limit the technical scope of the present disclosure, and many design modifications such as change, addition, deletion, etc., of the constituent elements may be made without departing from the spirit of the present disclosure defined in the claims. New embodiments resulting from added design change will provide the advantages of the embodiments and variations that are combined. In the above-described embodiments, the details for which such design change is possible are emphasized with the notations "according to the embodiment", "in the embodiment", etc. However, design change is also allowed for those without such notations. Optional combinations of the constituting elements included in each embodiment are also valid as embodiments of the present disclosure. Hatching applied to a cross section of a drawing does not limit the material of an object to which the hatching is applied.

### (Exemplary Variation)

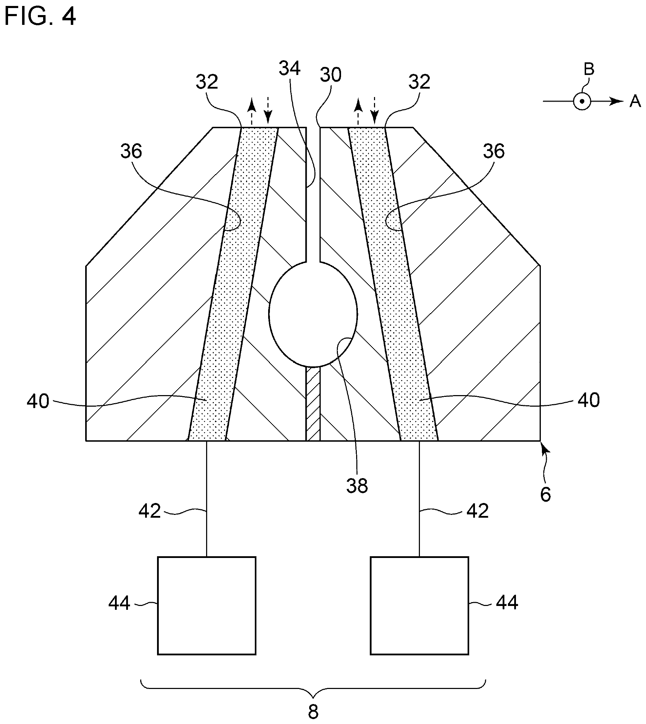

FIG. 4 is a cross-sectional view of a second die 6 of a double-sided coating apparatus 1 according to an exemplary variation. A second die 6 according to the present exemplary variation has two second openings 32 that are arranged so as to sandwich the first opening 30 in the conveyance direction A. The support unit 8 transports gas through each of the second openings 32. In the example shown in FIG. 4, the second die 6 is provided with two second openings 32 and two second spaces 36. The two second openings 32 are arranged so as to sandwich the first opening 30 in the conveyance direction A. The two second spaces 36 are arranged so as to sandwich the first space 34 in the conveyance direction A. The second spaces 36 located upstream of the first space 34 communicate with the second openings 32 located upstream of the first opening 30. The second spaces 36 located downstream of the first space 34 communicate with the second openings 32 located downstream of the first opening 30.

The support unit 8 has two sets of combinations of a porous material 40, a pipe 42, and an air supply and intake device 44. One porous material 40 is inserted into one second space 36, and the other porous material 40 is inserted into the other second space 36. Each porous material 40 is connected to a separate air supply and intake device 44 via the pipe 42. The substrate 12 is then supported by at least one of gas discharge and gas suction via each second opening 32. The two porous materials 40 may be connected to a common air supply and intake device 44.

By supporting the substrate 12 on both sides of the first opening 30 through which the second coating material 20 is discharged, the position and flatness of the portion of the substrate 12 facing the first opening 30 can be maintained with higher accuracy. Further, by supporting the substrate 12 downstream of the first opening 30 in the conveyance direction A, vibration of the substrate 12 caused by exposure to hot air in the drying furnace 10 can be suppressed from propagating to the part of the substrate 12 facing the first opening 30. This allows for the formation of a coating film of the second coating material 20 with a more uniform thickness.

The embodiments may be defined by the items described in the following.
[Item 1] A double-sided coating apparatus (1) including:
   a conveying mechanism (2) that continuously conveys a long substrate (12) having a first surface (12a) and a second surface (12b) opposite to the first surface (12a);
   a first die (4) that applies a first coating material (18) to the first surface (12a);
   a second die (6) that is located downstream of the first die (4) in the conveyance direction (A) of the substrate (12) and that applies a second coating material (20) to the second surface (12b); and
   a support unit (8) that is located downstream of the first die (4) in the conveyance direction (A) and that supports the substrate (12) at a target coating height (H1) at which the second surface (12b) is separated from the second die (6) by a predetermined amount through gas transfer that includes at least one of discharge of gas to the second surface (12b) and suction of gas interposed between the support unit (8) and the second surface (12b), wherein
   the second die (6) has a first opening (30) and a second opening (32) that open toward the second surface (12b) and has a first space (34) communicating with the first opening (30) and a second space (36) communicating with the second opening (32),
   the second coating material (20) flows into the first space (34), and the first opening (30) forms a discharge port for the second coating material (20), and
   the support unit (8) is arranged in the second space (36), and the second opening (32) forms a transfer port that performs at least one of the discharge of gas and the suction of gas.
[Item 2] The double-sided coating apparatus (1) according to Item 1, wherein
   the second die (6) has two second openings (32) that are arranged so as to sandwich the first opening (30) in the conveyance direction (A), and
   the support unit (8) transports gas through each of the second openings (32).
[Item 3] The double-sided coating apparatus (1) according to Item 1 or 2, wherein
   the support unit (8) is partitioned into a plurality of regions (40a, 40b) where the amount of gas that is transferred differs from one another.
[Item 4] The double-sided coating apparatus (1) according to Item 3, wherein
   the plurality of regions (40a, 40b) are aligned in the width direction (B) of the substrate (12).
[Item 5] The double-sided coating apparatus (1) according to any one of Items 1 through 4, wherein
   the end of the support unit (8) on the second surface (12b) side is arranged so as to be flush with the first opening (30).
[Item 6] The double-sided coating apparatus (1) according to any one of Items 1 through 5, wherein
   the substrate (12) is a current collector of a secondary battery, and
   the first coating material (18) and the second coating material (20) are electrode slurries of the secondary battery.

### [INDUSTRIAL APPLICABILITY]

The present disclosure can be used for double-sided coating apparatuses.

### [REFERENCE SIGNS LIST]

1 double-sided coating apparatus, 2 conveying mechanism, 4 first die, 6 second die, 8 support unit, 12 substrate, 12a first surface, 12b second surface, 18 first coating material, 20 second coating material, 30 first opening, 32 second opening, 34 first space, 36 second space, A conveyance direction, B width direction, H1 target coating height

## Claims

1. A double-sided coating apparatus comprising:
a conveying mechanism that continuously conveys a long substrate having a first surface and a second surface opposite to the first surface;
a first die that applies a first coating material to the first surface;
a second die that is located downstream of the first die in the conveyance direction of the substrate and that applies a second coating material to the second surface; and
a support unit that is located downstream of the first die in the conveyance direction and that supports the substrate at a target coating height at which the second surface is separated from the second die by a predetermined amount through gas transfer that includes at least one of discharge of gas to the second surface and suction of gas interposed between the support unit and the second surface, wherein
the second die has a first opening and a second opening that open toward the second surface and has a first space communicating with the first opening and a second space communicating with the second opening,
the second coating material flows into the first space, and the first opening forms a discharge port for the second coating material, and
the support unit is arranged in the second space, and the second opening forms a transfer port that performs at least one of the discharge of gas and the suction of gas.

2. The double-sided coating apparatus according to claim 1, wherein
the second die has two second openings that are arranged so as to sandwich the first opening in the conveyance direction, and
the support unit transports gas through each of the second openings.

3. The double-sided coating apparatus according to claim 1 or 2, wherein
the support unit is partitioned into a plurality of regions where the amount of gas that is transferred differs from one another.

4. The double-sided coating apparatus according to claim 3,
the plurality of regions are aligned in the width direction of the substrate.

5. The double-sided coating apparatus according to any one of claims 1 through 4, wherein
the end of the support unit on the second surface side is arranged so as to be flush with the first opening.

6. The double-sided coating apparatus according to any one of claims 1 through 5, wherein
the substrate is a current collector of a secondary battery, and
the first coating material and the second coating material are electrode slurries of the secondary battery.
